## Europäisches Patentamt
## European Patent Office
## Office européen des brevets

(19)

(11) Publication number: **0 036 251**
**A2**

(12) # EUROPEAN PATENT APPLICATION

(21) Application number: **81300698.8**

(22) Date of filing: **19.02.81**

(51) Int. Cl.³: **G 01 B 9/02**

(30) Priority: **21.02.80 GB 8005947**

(43) Date of publication of application:
**23.09.81 Bulletin 81/38**

(84) Designated Contracting States:
**CH DE FR LI**

(71) Applicant: **THE RANK ORGANISATION LIMITED**
**11 Hill Street**
**London W1X 8AE(GB)**

(72) Inventor: **Garratt, John David**
**31 The Osiers**
**Braunstone Leicestershire(GB)**

(72) Inventor: **Bates, Wilfred John**
**Stewartville Main Street**
**Newburgh Aberdeenshire Scotland(GB)**

(72) Inventor: **Player, Michael Anthony**
**65 Walker Road**
**Torry Aberdeen Scotland(GB)**

(74) Representative: **Cullis, Roger et al,**
**c/o H.G. Amann Patents Manager The Rank**
**Organisation Limited 439 Godstone Road**
**Whyteleafe, Surrey, CR3 OYG(GB)**

(54) Polarising optical system.

(57) A polarising interferometer wherein at least one of the two measuring arms (13,14) contains an optical cube corner (16 or 19) devoid of coatings on its reflecting surfaces and with its refractive index selected so that the resulting retardation and orientation of the principal axes causes the cube corner to act as a λ/4 plate, the beam through the uncoated cube corner being reflected back through a movable end reflector (18 or 20) insensitive to tilt and lateral movement so that the uncoated cube corner acts as a λ/2 plate on double transmission, and phase difference in the output beams is detected by an analyser (23, 26, 28) forming four spatially separated component beams respectively polarised at differing azimuth angles, which give two outputs in phase quadrature, of equal amplitude and free of d.c. offsets. The uncoated cube corner acting as a λ/4 plate on single transmission and a λ/2 plate on double transmission also has application to other polarising optical systems, especially where a coated cube corner has hitherto been used.

*FIG.1.*

Specification


Polarising Optical System


This invention relates to a polarising optical system and more especially, but not exclusively, to a polarisation coded interferometer.

A polarisation coded interferometer may comprise a polarising beamsplitter converting an incident polarised beam into two emergent beams, said two emergent beams being linearly polarised in orthogonal directions; optical means in each arm for reflecting the corresponding beam back to the polarising beamsplitter with its direction of polarisation rotated through 90 degrees, whereby said beamsplitter produces two coaxial output beams mutually polarised at right angles with a phase difference dependent on the path difference in said two arms; an optical analysing means for splitting the coaxial output beams into spatially separated component beams containing differentially phased interference fringe patterns; and optoelectric transducer devices receiving said component beams to produce electrical signals which can be measured to enable determination of the path difference in the two arms.

In a specific example of such an interferometer, the optical means in each of the two arms comprises a birefringent quarter wavelength plate and a plane reflector. This device, however, has practical disadvantages as a measuring instrument, which arise out of the use of the said plane reflector.

It is of great importance in such interferometers that the returning wavefronts from the two plane reflectors maintain a constant relative tilt during operation so that the interference fringe pattern does not change, giving spurious fringe counts. This can be overcome by replacing the plane reflectors by optical cube corners which always return a beam parallel to its incoming direction and are therefore insensitive to tilt. However small lateral movements of the cube corner can cause the two interfering beams not to overlap. This can be remedied by use of a cube corner and plane reflector combination which is independent of tilt and lateral movement. An extra advantage is the doubled sensitivity, the fringe pattern changing one complete fringe for a $\lambda/4$ movement of the cube corner. However, a problem can still arise in polarisation coded interferometers since the state of polarisation can be altered by any reflection at non-normal incidence such as in a cube corner reflector. Cube corners used in polarising optical systems have either had multilayer coatings deposited on the reflecting surfaces or used in conjunction with a particular birefringent waveplate so that the polarising effects are compensated rather than used to good effect.

Thus, an example of an interferometer which may employ a cube corner is known from U.K. Patent Specification No. 1,397,433. In one specific embodiment disclosed in this Specification, a cube corner is used instead of a plane reflector in one of the two arms. Disadvantageously, however, dielectric coatings must be provided on the reflecting surfaces of the cube corner, presumably to compensate for unwanted polarising effects.

It is an object of the present invention to provide a more practical alternative to the birefringent quarter wavelength plates and plane reflectors in a polarisation coded interferometer.

According to one aspect of the present invention, there is provided an optical system which includes on the optical axis a cube corner constructed of solid optical glass characterised in that the refractive index is selected such that the resulting retardance and orientation of principal axes causes the cube corner to act as a $\lambda/4$ plate on single transmission and a $\lambda/2$ plate

on double transmission without requiring the provision of any coatings on the reflecting surfaces of said cube corner.

According to another aspect of the invention, there is provided a polarising interferometer which comprises a polarising beamsplitter converting an incident polarised beam into two emergent beams on mutually perpendicular arms, said two emergent beams being linearly polarised in orthogonal directions; optical means in each arm for reflecting the corresponding beam back to the polarising beamsplitter with its direction of polarisation rotated through 90 degrees, whereby said beamsplitter produces two coaxial output beams mutually polarised at right angles with a phase difference dependent on the path difference in said two arms; an optical analysing means for splitting the coaxial output beams into spatially separated component beams containing differentially phased interference fringe patterns; and opto-electric transducer devices receiving said component beams to produce electrical signals which can be measured to enable determination of the path difference in the two arms; wherein said optical means in at least one of said arms of the interferometer includes an optical cube corner devoid of coatings on its reflecting surfaces and positioned such that its principal axes are suitably placed to cause such cube corner to act as a $\lambda/4$

plate on single transmission and a λ/2 plate on double transmission.

More specifically, in a practical embodiment of the invention, the optical means in each said arm comprises an uncoated optical cube corner and a plane reflector combination replacing the quarter wavelength plate and plane reflector. The optical cube corner in each arm acts as a quarter wavelength plate, the beam passing through the cube corner twice, and is orientated so as to rotate the direction of polarisation of the beam through 90 degrees. In addition, the cube corner in one arm is mounted for movement changing the relative phasing between the two arms. As the action of the cube corner and plane reflector is insensitive to tilt and lateral movement the cube corner can conveniently be mounted on a pivoted stylus arm.

In contrast to the interferometer known from U.K. Specification No. 1,397,433, the uncoated cube corner is used to produce a predetermined phase change and additionally the phase changing property of the uncoated cube corner is used with advantageous functional effect in the operation of the interferometer.

A further feature of the invention relates to the analysing means in a polarisation coded interferometer. It is known to employ a second polarising beamsplitter as the analysing means, whereby to separate the coaxial beams to enable their incidence on respective photoelectric devices. However, this analysing means does not readily enable accurate and reliable measurements to be achieved.

The invention enables the interferometer to be used for surface metrology applications, where reversible fringe counting and fringe interpolation is required. This can be accomplished by providing equal amplitude outputs in quadrature, which have no D.C. offsets, and are sine/cosine functions of position.

According to the invention, the optical analysing means comprises an arrangement of beamsplitters producing four component beams linearly polarised respectively in four differing directions.

In the practical embodiment above referred to, the arrangement of beamsplitters is preceded by a retardation plate, and comprises a nominally non-polarising beamsplitter providing two intermediate component beams, on orthogonal axes, and a polarising beamsplitter receiving the intermediate component beam on each axis. Four opto-electric devices are coupled in pairs to generate signal functions in phase quadrature free of offsets. Preferably, at least two said opto-electric devices are provided with gain adjustment means to compensate for polarisation effects in the non-polarising beamsplitter.

The invention will now be exemplified with reference to the accompanying drawings, in which:

Figure 1 diagrammatically shows a practical embodiment of polarisation coded interferometer, and

Figure 2 shows a mounting for movably supporting a cube corner in the interferometer of Figure 1.

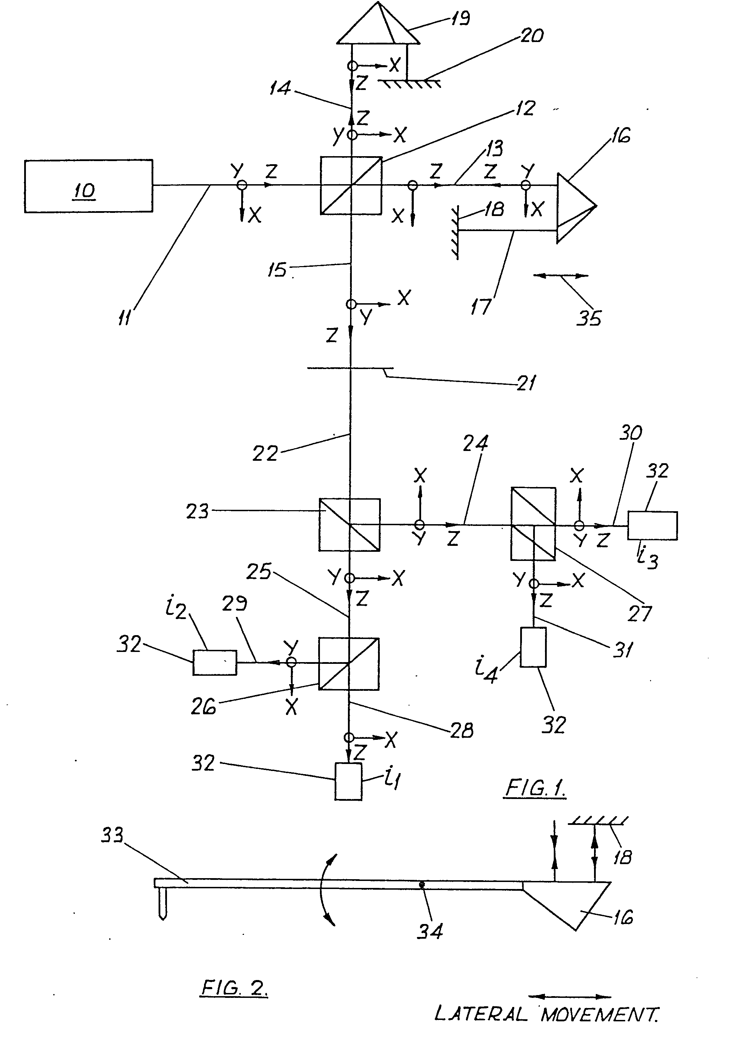

In Figure 1, the light beam paths are principally contained in the plane of the paper. In this plane, the optical axis is marked Z, and arrows on the optical axis indicate the direction of the beam. Orthogonal axes X and Y are marked adjacent the arrows Z, the X axis being in the plane of the paper. For the Y axis, a small circle indicates the direction out of the paper and a small dot indicates the direction into the paper.

A light source 10, such as a gas laser, produces an incident quasi monochomatic beam 11 linearly polarised at an angle of 45 degrees to the X axis. This incident beam 11 is received by a polarising beamsplitter 12, where the component of the incident beam polarised in the X-direction is transmitted and the component polarised in the Y-direction is reflected. The beamsplitter 12 thus gives rise to two emergent beams on mutually perpendicular arms 13 and 14, the transmitted beam 13 being linearly polarised in the X-direction and the reflected beam 14 being linearly polarised in the Y-direction. In each arm, optical means are provided for returning the beam 13 or 14 back along the same axis Z to the beamsplitter 12, with the direction of polarisation rotated through 90 degrees. Thus, the return beam 13 is linearly polarised in the Y-direction to be reflected by the beam splitter 12 and the return beam 14 is linearly polarised in the X-direction to be transmitted by the beamsplitter 12. Thus two coaxial output beams 15 are obtained, respectively linearly polarised in orthogonal directions. The two output beams have a phase difference dependent on difference in the path lengths of the arms 13 and 14.

In accordance with one aspect of the present invention, the above-mentioned optical means in each arm 13, 14 comprises an optical cube corner and a plane reflector. If the refractive index of the cube corner is chosen correctly, it is found that the polarising effect of the three reflections in it at a particular wavelength, is the same as that of a birefringent quarter wavelength plate with principal axes suitably placed. Considering the arm 13, such a cube corner 16 is orientated as indicated with one of its principal axes at an angle of 45 degrees to the X axis, converting the beam 13 linearly polarised in the X-direction to a circularly polarised beam 17 turned through 180 degrees by the three successive internal reflections at the cube corner faces. The beam 17, which lies in a plane parallel to and above the plane of the paper, is then incident on a plane reflector 18, which returns a circularly polarised beam of opposite handedness to the cube corner 16, which then converts this oppositely handed circularly polarised beam into the return beam 13 linearly polarised in the Y-direction. The cube corner in double transmission thus acts as a half wavelength plate.

A similar action is performed in the arm 14 by an optical cube corner 19 and a plane reflector 20.

The invention also provides analysing means for detecting the phase difference, $\delta$, in the coaxial output beams 15. This analysing means comprises a retardation plate 21 with its principal axes at 45 degrees to the X and Y axes, say imparting a retardation $\mu$, and converting the linearly polarised output beams 15 into two elliptically polarised coaxial beams 22 respectively of opposite handedness.

The retardation plate 21 is followed by a prism arrangement effective to produce four component beams which provide via photodetectors 32, two quadrature electrical outputs which are proportional to cos $\delta$ and sin $\delta$ and are free of offsets. This prism arrangement consists of a nominally non-polarising beamsplitter 23 producing mutually perpendicular composite beams 24 and 25. Each composite beam 24 or 25 consists of two elliptically polarised beams of opposite handedness, containing the said phase difference. Each composite beam 24 or 25 is incident on a polarising beamsplitter 26 or 27, the splitter 27 acting on the beam 24 being rotated through 45 degrees relative to the plane of the drawing. Thus, four component beams are produced, the component beams 30 and 31 emergent from the beamsplitter 27 being linearly polarised at angles of 45 and -45 degrees to the X axis, and the component beams 28 and 29 emergent from the beamsplitter 26 being linearly polarised at angles of 0 and 90 degrees, i.e. in the direction of the X and Y axes. The respective pairs of component beams 28, 29 and 30, 31 likewise contain the said phase difference, and give the possibility of producing the two offset free, equal amplitude signals proportional to cos $\delta$ and sin $\delta$.

Each component beam 28 to 31 is incident on a photoelectric detector 32. The photo-currents produced at these detectors due to incidence of the beams 28 to 31 are respectively designated $i_1$ to $i_4$.

If the beamsplitter 23 is completely non-polarising and the beamsplitters 26 and 27 are ideal the photocurrents $i_1$ to $i_4$ conform to the relationships:-

$$i_1 - i_2 \propto \sin \mu \sin \delta$$

$$i_3 - i_4 \propto \cos \delta$$

and therefore an electrical gain adjustment is necessary after photodetection to obtain equal amplitude quadrature signals.

If the beamsplitter 23 is not completely non-polarising, electrical gain adjustment is additionally necessary on $i_1$.

Further in the case where all components are ideal, changes of amplitude of beams 13 and 14 cause only a change in overall amplitude of the two output signals.

Thus with this type of electrical adjustment the quality of the signals is little affected if the state of polarisation of the light to the interferometer at 11 is changed, or the cube corner effective retardance is not $\pi/2$, or it is slightly misaligned, provided the beam divider 12 is of quality sufficiently high to ensure that the output beams at 15 are linearly polarised. A commercial sheet polariser of retardance $\mu$, and a non-perfect non-polarising beamsplitter can be used without degrading the performance of the interferometer.

The quadrature electrical outputs can be used with a counter which counts multiples of $2\pi$ in $\delta$ bidirectionally,

and also provides cycle interpolation for measurements of movements of the cube corners in terms of the wavelength of light $\lambda$ because if one of the arms of the interferometer be lengthened or shortened by a distance d then $\delta = 8\pi d/\lambda$.

A significant advantage of the use of optical cube corners is shown in FIGURE 2. This depicts the cube corner 16 in the arm 13 of the interferometer being used for changing the relative phase between the two arms by shortening or lengthening this arm. For this purpose, the cube corner 16 is movably mounted, as indicated at 35. The action of the cube corner 16 is serving both as a quarter wavelength plate and an end reflector insensitive to tilt and lateral movements. The necessary movement can be achieved by mounting the cube corner 16 on a stylus arm 33 pivoting about the axis 34, the stylus tip making contact with the object being displaced.

## Claims

1.   A polarising optical system which includes on the optical axis a cube corner constructed of solid optical glass characterised in that the refractive index is selected such that the resulting retardance and orientation of principal axes causes the cube corner to act as a $\lambda/4$ plate on single transmission and a $\lambda/2$ plate on double transmission without requiring the provision of any coatings on the reflecting surfaces of said cube corner.

2.   A polarising interferometer which comprises a polarising beamsplitter converting an incident polarised beam into two emergent beams on mutually perpendicular arms, said two emergent beams being linearly polarised in orthogonal directions;   optical means in each arm for reflecting the corresponding beam back to the polarising beamsplitter with its direction of polarisation rotated through 90 degrees, whereby said beamsplitter produces two coaxial output beams mutually polarised at right angles with a phase difference dependent on the path difference in said two arms;   an optical analysing means for splitting the coaxial output beams into spatially separated component beams containing differentially phased interference fringe patterns; and opto-electric transducer devices receiving said component beams to produce electrical signals which can be measured to enable determination of the path difference in the two arms; characterised in that said optical means in at least one of said arms of the interferometer includes an optical cube corner devoid of coatings on its reflecting surfaces and positioned such that its principal axes are suitably placed to cause such cube corner to act as a $\lambda/4$ plate on single transmission and a $\lambda/2$ plate on double transmission.

3. An interferometer according to claim 2 characterised by a said uncoated optical cube corner in each arm.

4. An interferometer according to claim 2 or claim 3 including mounting means for said cube corner in at least one of said arms, characterised in that said mounting means comprises a pivoted arm for moving said cube corner to change the relative phase between the two arms.

5. An interferometer according to any of claims 2 to 4, characterised in that the optical means in each arm of the interferometer consists of an uncoated cube corner and a plane reflector.

6. An interferometer according to any of claims 2 to 5, characterised in that the optical analysing means comprises an arrangement of beamsplitters producing four component beams linearly polarised respectively in four differing directions, and in that the arrangement of beamsplitters is preceded on the optical axis by a retardation plate.

7.     An interferometer according to claim 6 characterised in that the arrangement of beamsplitters comprises a nominally non-polarising beamsplitter providing two intermediate component beams on orthogonal axes, and a polarising beamsplitter receiving the intermediate component beam on each of said orthogonal axes.

8.     An interferometer according to claim 7 characterised by at least two opto-electric transducer devices provided with gain adjustment means to compensate for unwanted output beam amplitude differences.

9.     An interferometer according to claim 8 characterised in that four opto-electric transducer devices are coupled in pairs to generate signal functions that are in phase quadrature, of equal amplitude free from unrequired offsets, and bidirectional counting and interpolation means are fed with said signal functions.

10.     An interferometer according to claim 9 characterised in that the interpolation means comprises a pair of switched resistor networks to provide for generation of signal functions whose ratio is proportional to the tangent of an angle, means whereby digital representation effects switching of the networks, and means for effecting synchronisation of fringe division to fringe count.

11. An interferometer according to any of claims 2 to 10 characterised by its application in miniature form to stylus type sensing where the range of movement of the stylus arm is small.

12. An interferometer according to any of claims 2 to 11, characterised by a light source comprising a low power unstabilised laser.

1/1

FIG.1.

FIG. 2.

LATERAL MOVEMENT.